# EUROPEAN PATENT APPLICATION

(11) **EP 4 657 795 A1**
(43) Date of publication of application: **03.12.2025**
(21) Application number: 24752823.5
(22) Date of filing: 04.02.2024
(51) Int. Cl.: H04L 9/08

(54) **COMMUNICATION METHOD AND COMMUNICATION APPARATUS**

(30) Priority: 12.02.2023 CN 202310145878
(71) Applicant: Huawei Technologies Co., Ltd., Shenzhen, Guangdong 518129 (CN)
(72) Inventor: LI, He, Shenzhen, Guangdong 518129 (CN); WU, Rong, Shenzhen, Guangdong 518129 (CN); HU, Li, Shenzhen, Guangdong 518129 (CN)
(74) Representative: Goddar, Heinz J.
(86) International application number: PCT/CN2024/075721
(87) International publication number: WO 2024/164968

(57) **Abstract**

This application provides a communication method and apparatus, to resolve a problem that a UE fails to access a network through trusted non-3GPP. The method includes: When a user equipment UE registers with a core network through a trusted non-3GPP access network, the UE generates identification information that is capable of uniquely representing the UE, and sends the identification information to a TNGF; and the TNGF associates the identification information with a corresponding TNGF key. In this way, after subsequently receiving the identification information sent by the UE, the TNGF can accurately determine, based on the identification information, the TNGF key corresponding to the UE, to establish a secure connection with the UE by using the TNGF key corresponding to the UE.

## Description

### CROSS-REFERENCE TO RELATED APPLICATIONS

This application claims priority to Chinese Patent Application No. 202310145878.3, filed with the China National Intellectual Property Administration on February 12, 2023 and entitled "COMMUNICATION METHOD AND APPARATUS", which is incorporated herein by reference in its entirety.

### TECHNICAL FIELD

This application relates to the field of communication technologies, and in particular, to a communication method and a communication apparatus.

### BACKGROUND

A user equipment (user equipment, UE) may register with a core network through a 3rd Generation Partnership Project (3rd Generation Partnership Project, 3GPP) access network or a trusted non-3GPP access network (trusted non-3GPP access network, TNAN). The TNAN may include one or more trusted non-3GPP access points (trusted non-3GPP access point, TNAP) and one or more trusted non-3GPP gateway functions (trusted non-3GPP gateway function, TNGF).

When a UE accesses a network through a trusted non-3GPP gateway function (trusted non-3GPP gateway function, TNGF) network element, for communication security, a secure connection, for example, an Internet protocol security (Internet Protocol Security, IPsec) tunnel, needs to be established between the UE and the TNGF, and a TNGF key shared between the UE and the TNGF needs to be used to establish the secure connection. TNGF keys shared between different UEs and the TNGF are different. In the conventional technology, anonymous subscription concealed identifiers (Subscription Concealed Identifier, SUCI) of different UEs may be the same. In this case, the TNGF cannot distinguish between different UEs by using these anonymous SUCIs. Consequently, the TNGF cannot accurately obtain a TNGF key corresponding to a UE, and consequently cannot establish an IPsec tunnel between the UE and the TNGF. As a result, the UE cannot register with a network through the trusted non-3GPP access network.

Therefore, how the TNGF determines TNGF keys corresponding to different UEs to establish a secure tunnel between a UE and the TNGF is a technical problem to be urgently resolved.

### SUMMARY

Embodiments of this application provide a communication method and a communication apparatus, to resolve a problem that a UE fails to register with a network through a trusted non-3GPP access network, thereby improving communication security performance.

To achieve the foregoing objective, this application uses the following technical solutions:
According to a first aspect, a communication method is provided, applied to a scenario in which a terminal apparatus registers with a network through a trusted non-3GPP access network. The trusted non-3GPP access network includes a trusted non-3GPP gateway function TNGF, and the communication method includes: The terminal apparatus receives an authentication request message from the TNGF. The terminal apparatus sends an authentication response message to the TNGF in response to the authentication request message, where the authentication response message includes a registration request message and identification information that is capable of uniquely representing the terminal apparatus. The registration request message is used to request to register with the network and carries an anonymous subscription concealed identifier SUCI corresponding to the terminal apparatus. The terminal apparatus sends a secure connection establishment request message, where the secure connection establishment request is used to trigger establishment of a secure connection between the terminal apparatus and the TNGF, where the secure connection establishment request message includes the identification information and a first authentication parameter. The first authentication parameter is generated based on a TNGF key K_{TNGF}, and the K_{TNGF} is a shared key between the terminal apparatus and the TNGF.

It may be understood that, in this application, the terminal apparatus in the first aspect and the following aspects may be a terminal device (for example, a mobile phone), or a chip (system) that may be disposed in the terminal device. In other words, the communication method according to the first aspect may be performed by a terminal device, or may be performed by a chip (system) in the terminal device.

Based on the communication method provided in the first aspect, when the terminal apparatus carries the anonymous SUCI in the registration request message, the terminal apparatus generates the identification information that is capable of uniquely representing the terminal apparatus, and sends the identification information to the TNGF, so that the TNGF associatively stores the identification information and the TNGF key K_{TNGF} corresponding to the terminal apparatus. Subsequently, when the terminal apparatus requests to establish the secure connection between the terminal apparatus and the TNGF, the secure connection establishment request message carries the identification information, so that the TNGF finds, based on the identification information, the TNGF key corresponding to the terminal apparatus, and continues a subsequent secure connection establishment procedure based on the TNGF key. In this way, when different terminal apparatuses that use a same anonymous SUCI register with a network through a trusted non-3GPP access network, a TNGF in the trusted non-3GPP access network can still identify TNGF keys corresponding to the different terminal apparatuses, to establish a secure connection between a corresponding terminal apparatus and the TNGF based on a corresponding TNGF key.

In a possible design solution, the method further includes: The terminal apparatus generates a security tunnel key K_{TIPSec} based on the K_{TNGF}; and the terminal apparatus generates the first authentication parameter based on the K_{TIPSec}. For a method in which the terminal apparatus generates the security tunnel key K_{TIPSec} based on the K_{TNGF}, refer to the record in section A.22 of TS33.501 V18.0.0. The K_{TIPSec} is a key used to establish a secure connection (IPSec SA) between the terminal apparatus and the TNGF. Correspondingly, that the TNGF continues the subsequent secure connection establishment procedure based on the TNGF key may specifically include: The TNGF generates the K_{TIPSec} based on the TNGF key, and then verifies the first authentication parameter by using the K_{TIPSec}. When the first authentication parameter is successfully verified (that is, the TNGF successfully authenticates the terminal apparatus), the TNGF generates a second authentication parameter by using the K_{TIPSec}, and sends the second authentication parameter to the terminal apparatus. The terminal apparatus verifies the second authentication parameter by using the K_{TIPSec}. When the second authentication parameter is also successfully verified (that is, the terminal apparatus successfully authenticates the TNGF), the terminal apparatus and the TNGF complete bidirectional authentication, so that a secure connection is established.

In a possible implementation, the anonymous SUCI is an SUCI in a network access identifier NAI format, where a user name part of the SUCI in the NAI format is an empty value or a fixed character string. When the terminal apparatus accesses the network for the first time, and the terminal apparatus is not configured with a public key for the network, when sending a registration request, the terminal apparatus carries an SUCI in an NAI format in the registration request. Considering that the anonymous SUCI cannot uniquely represent a terminal apparatus in this case, the terminal apparatus generates the identification information, and carries the identification information in the authentication response message to represent the terminal apparatus.

In a possible implementation, the identification information is one or a combination of a random number generated by the terminal apparatus, a hash value of a parameter that is capable of uniquely representing the terminal apparatus, or a modified SUCI, where a user name part of the modified SUCI is determined based on the random number or the hash value, and a domain name part of the modified SUCI is the same as a domain name part of the anonymous SUCI. It should be noted that, when the random number generated by the terminal apparatus is used as the identification information, there is still a possibility of collision, that is, random numbers generated by different terminal apparatuses may be the same. In order to make the collision probability low enough, a random number with a long bit, for example, a 64-bit random number, may be agreed on in a standard. The parameter that is capable of uniquely representing the terminal apparatus may be, for example, a subscription permanent identifier (subscription permanent identifier, SUPI) corresponding to the terminal apparatus or the K_{TNGF}. If a format of the anonymous SUCI is anonymous@realm or @realm, the modified SUCI may be RAND@realm, HASH (RAND)@realm, or HASH (K_{TNGF})@realm.

In a possible implementation, the authentication response message includes an access network parameter and the registration request message, and the identification information is carried in a user identifier field of the access network parameter. That is, in the conventional technology, a value of the user identifier field of the access network parameter is replaced with the identification information from the anonymous SUCI, thereby minimizing changes to an existing authentication response message format and ensuring system compatibility.

According to a second aspect, a communication method is provided, applied to a scenario in which a terminal apparatus registers with a network through a trusted non-3GPP access network. The communication method includes: A TNGF in the trusted non-3GPP access network sends an authentication request message to the terminal apparatus, and the TNGF then receives an authentication response message from the terminal apparatus, where the authentication response message includes indication information. In response to the indication information, the TNGF obtains an identifier (that is, association information of the terminal apparatus) for uniquely identifying the terminal apparatus, and then the TNGF associatively stores a K_{TNGF} and the association information of the terminal apparatus. Subsequently, when receiving a secure connection establishment request message from the terminal apparatus, the TNGF obtains the K_{TNGF} based on the association information included in the secure connection establishment request message, and continues, based on the K_{TNGF}, a subsequent procedure of establishing a secure connection. A process of continuing, based on the K_{TNGF}, the subsequent procedure of establishing the secure connection is similar to that in the first aspect, and details are not described herein again.

Based on the communication method provided in the second aspect, the TNGF determines, based on the indication information from the terminal apparatus, that the association information that can uniquely identify the terminal apparatus needs to be obtained, and then associatively stores the K_{TNGF} and the association information of the terminal apparatus, so that when the secure connection establishment request message from the terminal apparatus is received subsequently, the TNGF can obtain the K_{TNGF} based on the association information carried in the secure connection establishment request message, and continue, based on the K_{TNGF}, the subsequent procedure of establishing the secure connection.

In a possible implementation, the terminal apparatus cannot generate the association information by itself based on preset processing logic. For example, the association information may be a random number generated by the TNGF. In this case, before the secure connection establishment request message is received, the method further includes: The TNGF sends the association information to the terminal apparatus.

In a possible implementation, the terminal apparatus may generate the association information by itself based on preset processing logic. In this case, it needs to be specified in a standard that the terminal apparatus and the TNGF respectively generate same association information based on same processing logic on time. For example, the association information may be a hash value of the K_{TNGF}, that is, the terminal apparatus and the TNGF may respectively obtain the association information based on a parameter shared by each other, for example, the K_{TNGF}. In this case, the TNGF does not need to send the association information to the terminal apparatus, thereby saving signaling resources.

In a possible implementation, the indication information indicates the terminal apparatus to request to register with the network by using an anonymous subscription concealed identifier SUCI. The TNGF determines, based on the indication information, that the TNGF needs to generate the association information for the terminal apparatus. It may be understood that when the authentication response message does not include the indication information, the TNGF may perform processing according to the conventional technology, and does not need to generate identity information for the terminal apparatus. Therefore, this solution can be well compatible with a case in which a terminal apparatus in an existing network accesses a network not for the first time, and a case in which a terminal apparatus that is preconfigured with a public key for the network accesses the network through the TNGF.

In a possible implementation, that the TNGF continues, based on the K_{TNGF}, the subsequent procedure of establishing the secure connection includes: The TNGF generates a security tunnel key K_{TIPSec} based on a TNGF key K_{TNGF}; and the TNGF continues, based on the K_{TIPSec}, the subsequent procedure of establishing the secure connection. For related descriptions, refer to the related descriptions in the first aspect, and details are not described herein again.

In a possible implementation, the authentication response message includes an access network parameter and a registration request message, and the indication information is carried in the access network parameter. Specifically, the indication information may be carried in the access network parameter as a newly added IE, or may be represented by a user identifier (UE ID) field in the access network parameter. According to the conventional technology, the registration request message includes an anonymous subscription concealed identifier SUCI corresponding to the terminal apparatus, and the access network parameter includes a UE ID field. In a possible implementation, different from the conventional technology, in addition to the UE ID field, the access network parameter may further include the indication information, that is, the indication information is used as a newly added independent IE in the access network parameter. In another possible implementation, the indication information may be represented by setting a UE ID in the access network parameter to an empty value (that is, the anonymous SUCI is not carried). In still another possible implementation, the UE ID field in the access network parameter may be set to the anonymous SUCI. In still another possible implementation, the UE ID field in the access network parameter may be set to a modified SUCI. If a format of the anonymous SUCI is anonymous@realm or @realm, the modified SUCI may be indication information @realm, that is, the indication information is represented by using a user name part of the anonymous SUCI.

According to a third aspect, a communication method is provided, applied to a scenario in which a terminal apparatus registers with a network through a trusted non-3GPP access network. The trusted non-3GPP access network includes a trusted non-3GPP gateway function TNGF, and the communication method includes: The terminal apparatus receives an authentication request message from the TNGF. The terminal apparatus sends an authentication response message to the TNGF in response to the authentication request message, where the authentication response message includes a registration request message and indication information, where the registration request message is used to request to register with the network, and the indication information indicates the TNGF to generate association information for uniquely identifying the terminal apparatus. The terminal apparatus obtains the association information. The terminal apparatus sends a secure connection establishment request message, where the secure connection establishment request is used to trigger establishment of a secure connection between the terminal apparatus and the TNGF, where the secure connection establishment request message includes the association information and a first authentication parameter. The first authentication parameter is generated based on a TNGF key K_{TNGF}, and the K_{TNGF} is a shared key between the terminal apparatus and the TNGF.

It may be understood that, in this application, the terminal apparatus in the first aspect may be a terminal device (for example, a mobile phone), or a chip (system) that may be disposed in the terminal device. In other words, the communication method according to the first aspect may be performed by a terminal device, or may be performed by a chip (system) in the terminal device.

Based on the communication method provided in the first aspect, when the terminal apparatus carries the anonymous SUCI in the registration request message, the terminal apparatus generates the identification information that is capable of uniquely representing the terminal apparatus, and sends the identification information to the TNGF, so that the TNGF associatively stores the identification information and the TNGF key K_{TNGF} corresponding to the terminal apparatus. Subsequently, when the terminal apparatus requests to establish the secure connection between the terminal apparatus and the TNGF, the secure connection establishment request message carries the identification information, so that the TNGF finds, based on the identification information, the TNGF key corresponding to the terminal apparatus, and continues a subsequent secure connection establishment procedure based on the TNGF key. In this way, when different terminal apparatuses that use a same anonymous SUCI register with a network through a trusted non-3GPP access network, a TNGF in the trusted non-3GPP access network can still identify TNGF keys corresponding to the different terminal apparatuses, to establish a secure connection between a corresponding terminal apparatus and the TNGF based on a corresponding TNGF key.

Based on the communication method provided in the second aspect, the terminal apparatus sends the indication information to the TNGF, to indicate the TNGF to generate the association information that can uniquely identify the terminal apparatus, and then associatively stores the K_{TNGF} and the association information of the terminal apparatus. Therefore, the terminal apparatus may subsequently send, when requesting to establish a secure connection between the terminal apparatus and the TNGF, a secure connection establishment request message carrying the association information to the TNGF, so that the TNGF can accurately obtain the K_{TNGF} corresponding to the terminal apparatus, and then establish the secure connection based on the K_{TNGF}.

In a possible implementation, the terminal apparatus may generate the association information by itself based on preset processing logic. In this case, it needs to be specified in a standard that the terminal apparatus and the TNGF respectively generate same association information based on same processing logic on time. For example, the association information may be a hash value of the K_{TNGF}, that is, the terminal apparatus and the TNGF may respectively obtain the association information based on a parameter shared by each other, for example, the K_{TNGF}. In this case, the TNGF does not need to send the association information to the terminal apparatus, thereby saving signaling resources.

In another possible implementation, the terminal apparatus cannot generate the association information by itself based on preset processing logic. For example, the association information may be a random number generated by the TNGF. That the terminal apparatus obtains the association information includes: The terminal apparatus receives the association information from the TNGF.

In a possible design solution, the method further includes: The terminal apparatus generates a security tunnel key K_{TIPSec} based on the K_{TNGF}; and the terminal apparatus generates the first authentication parameter based on the K_{TIPSec}. For related descriptions, refer to related content in the first aspect, and details are not described herein again.

In a possible implementation, the authentication response message includes an access network parameter and the registration request message, and the indication information is carried in the access network parameter. For related descriptions, refer to related content in the second aspect, and details are not described herein again.

In a possible implementation, before the terminal apparatus sends the authentication response message to the TNGF, the method further includes: The terminal apparatus determines that the terminal apparatus accesses the network for the first time and that the terminal apparatus is not configured with a public key for the network. The terminal apparatus carries the indication information in the authentication response message only when it is determined that the terminal apparatus accesses the network for the first time and the terminal apparatus is not configured with the public key for the network. If the terminal apparatus accesses the network not for the first time or the terminal apparatus is configured with the public key for the network, the indication information does not need to be carried in the authentication response message. Therefore, this solution can be well compatible with a case in which a terminal apparatus in an existing network accesses a network not for the first time, or a case in which a terminal apparatus that is preconfigured with a public key for the network accesses the network through the TNGF.

According to a fourth aspect, a communication apparatus is provided. The communication apparatus includes a module, such as a transceiver module and a processing module, configured to perform any communication method performed by the terminal apparatus in the foregoing descriptions. The transceiver module is configured to perform a corresponding message receiving and sending action, and the processing module may be configured to perform all actions except receiving and sending information.

Optionally, the communication apparatus according to the fourth aspect may further include a storage module, where the storage module stores a program or instructions. When the processing module executes the program or the instructions, the communication apparatus can perform any communication method performed by the terminal apparatus in the foregoing descriptions.

According to a fifth aspect, a trusted non-3GPP gateway function TNGF is provided. The trusted non-3GPP gateway function includes a module, such as a transceiver module and a processing module, configured to perform any communication method performed by the TNGF in the foregoing descriptions. The transceiver module is configured to perform a corresponding message receiving and sending action, and the processing module may be configured to perform all actions except receiving and sending information.

Optionally, the TNGF according to the fifth aspect may further include a storage module, where the storage module stores a program or instructions. When the processing module executes the program or the instructions, a communication apparatus can perform any communication method performed by the TNGF in the foregoing descriptions.

According to a sixth aspect, a communication apparatus is provided. The communication apparatus includes a processor, and the processor is configured to execute instructions stored in a memory, so that the communication apparatus performs any communication method performed by the terminal apparatus in the foregoing descriptions.

In a possible design solution, the communication apparatus may further include the memory. The memory may be integrated with the processor, or may be disposed separately.

According to a seventh aspect, a trusted non-3GPP gateway function TNGF is provided. The TNGF includes a processor, and the processor is configured to execute instructions stored in a memory, so that the communication apparatus performs any communication method performed by the TNGF in the foregoing descriptions.

According to an eighth aspect, a computer-readable storage medium is provided, including a computer program or instructions. When the computer program or the instructions are run on a computer, the computer is caused to perform the communication method according to any possible implementation.

According to a twelfth aspect, a computer program product is provided, including a computer program or instructions. When the computer program or the instructions are run on a computer, the computer is caused to perform the communication method according to any possible implementation.

### BRIEF DESCRIPTION OF DRAWINGS

FIG. 1 is a diagram of an architecture of a core network according to an embodiment of this application;
FIG. 2 is a schematic flowchart of a communication method according to an embodiment of this application;
FIG. 3 is a schematic flowchart of another communication method according to an embodiment of this application;
FIG. 4 is a schematic flowchart of still another communication method according to an embodiment of this application;
FIG. 5 is a structural diagram of an apparatus according to an embodiment of this application; and
FIG. 6 is a structural diagram of another apparatus according to an embodiment of this application.

### DESCRIPTION OF EMBODIMENTS

To better understand technical solutions provided in embodiments of this application, technical terms involved in embodiments of this application are first described.

1. 5th generation (5th generation, 5G) mobile communication system (referred to as a 5G system (5G system, 5GS) for short):

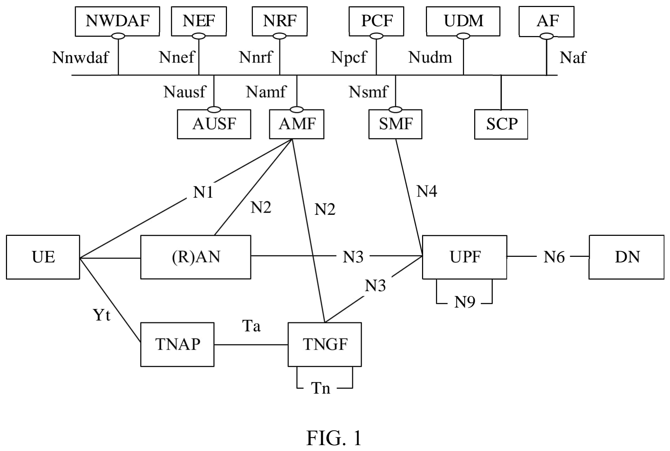

FIG. 1 is a diagram of an architecture of a 5GS. As shown in FIG. 1, the 5GS includes an access network (access network, AN) and a core network (core network, CN), and may further include a UE.

The CN may include a user plane function (user plane function, UPF) network element (referred to as a user plane network element for short), an access and mobility management function (core access and mobility management function, AMF) network element, a session management function (session management function, SMF) network element (referred to as a session management network element for short), an authentication server function (authentication server function, AUSF) network element, a network data analytics function (network data analytics function, NWDAF) network element (referred to as a network data analytics network element for short), a network exposure function (network exposure function, NEF) network element, a network function repository function (network exposure function Repository Function, NRF) network element, a policy control function (policy control function, PCF) network element (referred to as a policy control network element for short), a unified data management (unified data management, UDM) network element (referred to as a data management network element for short), an application function (application function, AF) network element, a service communication proxy (service communication proxy, SCP) network element, or the like.

The AN may include a 3GPP access network (that is, a radio access network) and a trusted non-3GPP access network. The 3GPP access network may include some access devices that provide air interface access for the UE, for example, a base station. The trusted non-3GPP access network may include a trusted non-3GPP access point (trusted non-3GPP access point, TNAP) network element and a trusted non-3GPP gateway function (trusted non-3GPP gateway function, TNGF) network element.

It should be noted that FIG. 1 merely provides some examples of network elements or entities in a 5G network. The 5G network may further include some network elements or entities that are not shown in FIG. 1, such as a unified data repository (unified data repository, UDR) network element, a network slice selection function (network slice selection function, NSSF) network element, and a charging function (charging function, CHF) network element. This is not specifically limited in this embodiment of this application.

As shown in FIG. 1, the UE accesses the 5G network through an AN device, and the UE communicates with the AMF network element through an N1 interface (referred to as N1 for short). A RAN device communicates with the AMF network element through an N2 interface (referred to as N2 for short). The UE communicates with the TNAP through a Yt interface, and the TNAP communicates with the TNGF network element through a Ta interface. The TNGF network element communicates with the AMF network element through an N2 interface. The TNGF network element further communicates with the UPF network element through an N3 interface. The RAN device communicates with the UPF network element through an N3 interface (referred to as N3 for short). The SMF network element communicates with the UPF network element through an N4 interface (referred to as N4 for short), and the UPF network element accesses a data network (data network, DN) through an N6 interface (referred to as N6 for short). In addition, control plane functions such as the AUSF network element, the AMF network element, the SMF network element, the NEF network element, the NRF network element, the PCF network element, the UDM network element, the UDR network element, the AF network element, the NWDAF network element, or the SCP network element shown in FIG. 1 interact with each other through a service-based interface. For example, a service-based interface provided by the AUSF network element externally is Nausf, a service-based interface provided by the AMF network element externally is Namf, a service-based interface provided by the SMF network element externally is Nsmf, a service-based interface provided by the NEF network element externally is Nnef, a service-based interface provided by the NRF network element externally is Nnrf, a service-based interface provided by the PCF network element externally is Npcf, a service-based interface provided by the UDM network element externally is Nudm, and a service-based interface provided by the AF network element externally is Naf. In addition, a service-based interface provided by the UDR network element externally is Nudr, a service-based interface provided by the NSSF network element externally is Nnssf, and a service-based interface provided by the CHF network element externally is Nchf. For related function descriptions and interface descriptions, refer to a diagram of a 5G system architecture (5G system architecture) in the 23501 standard. Details are not described herein.

The following separately describes functions of various parts or network elements involved in the network architecture in the 5G network by using examples.
(1) A terminal apparatus may be a terminal having a receiving and sending function, or may be a chip or a chip system that may be disposed in the terminal. The terminal may also be referred to as a user equipment (user equipment, UE), an access terminal, a subscriber unit (subscriber unit), a subscriber station, an in-vehicle terminal, an industrial control terminal, a mobile station (mobile station, MS), a remote station, a remote terminal, a mobile device, a user terminal, a terminal, a wireless communication device, a user agent, or the like. The terminal apparatus may be fixed or mobile, and may be deployed on land, including indoor or outdoor, handheld, wearable, or in-vehicle; or may be deployed on water (for example, on a ship); or may be deployed in the air (for example, on an airplane, a balloon, or a satellite). For example, the terminal apparatus may be a gateway station, a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), an in-vehicle terminal device, a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), an in-vehicle terminal, a road side unit (road side unit, RSU) with a terminal function, or the like. For ease of expression subsequently, in this application, a UE is used as an example to describe related solutions.
(2) The AN is configured to implement an access-related function, may provide a network access function for an authorized terminal in a specific region, and can use transmission tunnels of different quality based on a level of the terminal, a service requirement, and the like. The AN forwards a control signal and user data between a network element terminal and the CN. The AN in this application may be a radio access network (radio access network, RAN) or a TNAN. The RAN can manage radio resources and provide an access service for a terminal device, to forward a control signal and terminal data between the terminal and the core network. The RAN may also be understood as a base station in a conventional network. For example, the RAN may be responsible for functions such as radio resource management, quality of service (quality of service, QoS) management, and data compression and encryption on an air interface side. The TNAN is configured to provide a trusted non-3GPP access capability for the terminal apparatus, and the terminal apparatus may access a network through the TNAN.
(3) A TNAP network element is configured to provide a UE access function. The TNAP may be referred to as a trusted non-3GPP access point, and the trusted non-3GPP access point may be an access node deployed by an operator. The TNAP may be configured to: send an authentication, authorization, and accounting (authentication, authorization, and accounting, AAA) message, for example, encapsulate an identity authentication protocol (extensible authentication protocol, EAP) data packet into the AAA message, and interact with the TNGF to forward a NAS message.
(4) The TNGF network element is configured to serve as a gateway of a trusted non-3GPP access network. The TNGF may be configured to support an N2 interface and an N3 interface, may be configured to terminate EAP-5G signaling, and may implement functions such as AMF selection, processing of N2 signaling with the SMF (relayed by the AMF) to support a session and QoS, and a transparent relay PDU between a terminal device and a user plane device. In addition, for descriptions of functions of other network elements, refer to the descriptions of functions of corresponding network elements in FIG. 1. Details are not described herein again. N1, N2, N3, N4, N6, and N11 are interface sequence numbers. For meanings of these interface sequence numbers, refer to meanings defined in the 3GPP standard protocol. This is not limited herein.
(5) A mobility management network element is a core network element, and is mainly responsible for signaling processing, for example, functions such as access control, mobility management, attachment and detachment, and gateway selection. When serving a session of a terminal, the mobility management network element provides control plane storage resources for the session, to store a session identifier, an SMF network element identifier associated with the session identifier, and the like. In a 5G communication system, the mobility management network element may be an access and mobility management function (access and mobility management function, AMF) network element. In a future communication system, the mobility management network element may still be an AMF network element or may have another name. This is not limited in this application.
(6) The session management network element is configured to perform session management in a mobile network, for example, responsible for user plane network element selection, user plane network element redirection, internet protocol (internet protocol, IP) address allocation, establishment, modification, and release of a bearer, QoS control, session management, IP address allocation and management of a terminal, selection of an endpoint that can manage a user plane function and a policy control and charging function interface, downlink data notification, and the like. In a 5G communication system, the session management network element may be an SMF network element. In a future communication system, the session management network element may still be an SMF network element or may have another name. This is not limited in this application.
(7) The user plane network element is configured to perform packet routing and forwarding, quality of service (quality of service, QoS) processing of user plane data, and the like. In a 5G communication system, a network element or an entity corresponding to the user plane network element may be a user plane function (user plane function, UPF) network element in the 5G network architecture. In a future communication system, the user plane network element may still be a UPF network element, or the user plane network element has another name. This is not limited in embodiments of this application.
(8) The authentication server function network element mainly provides an authentication function and supports authentication for 3rd Generation Partnership Project (3rd generation partnership project, 3GPP) access and non-3GPP access. For details, see 3GPP TS 33.501. In a 5G communication system, the authentication server function network element may be an authentication server function (authentication server function, AUSF) network element. In a future communication system, the authentication server function network element may still be an AUSF network element, or the authentication server function network element has another name. This is not limited in embodiments of this application.
(9) The data management network element is configured to perform user identifier processing, access authentication, registration, mobility management, or the like. In a 5G communication system, a network element or an entity corresponding to the data management network element may be a unified data management (unified data management, UDM) network element in the 5G network architecture, where Nudm is a service-based interface provided by the UDM network element, and the UDM network element may communicate with another network function through the Nudm. In a future communication system, the data management network element may still be a UDM network element, or the data management network element has another name. This is not limited in embodiments of this application.
(10) The network exposure function network element mainly provides a service, to enable a 3rd Generation Partnership Project (3rd generation partnership project, 3GPP) network to securely provide a network service capability for a third-party service provider, namely, the application function network element 207. In a 5G communication system, the network exposure function network element may be a network exposure function (network exposure function, NEF) network element, where Nnef is a service-based interface provided by the NEF network element, and the NEF network element may communicate with another network function through the Nnef. In a future communication system, the network exposure function network element may still be an NEF network element or may have another name. This is not limited in embodiments of this application.
(11) The policy control network element includes a user subscription data management function, a policy control function, a charging policy control function, QoS control, and the like, is a unified policy framework for guiding network behavior, and provides policy rule information and the like for a control plane function network element (for example, the AMF network element or the like). In a 5G communication system, the policy control network element may be a PCF network element. In a future communication system, the policy control function network element may still be a PCF network element or may have another name. This is not limited in embodiments of this application.
(12) The application function network element is mainly configured to provide application layer information for the 3GPP network. In a 5G communication system, the application function network element 207 may be an application function (application function, AF) network element, where Naf is a service-based interface provided by the AF network element, and the AF network element may communicate with another network function through the Naf. In a future communication system, the application function network element may still be an AF network element or may have another name. This is not limited in embodiments of this application. For example, the AF network element may include a service capability server (services capability server, SCS) or an application server (application server, AS).
(13) The data network refers to a network that provides a data transmission service for a terminal, for example, an IMS (IP Multi-media Service, IP multimedia service) and the Internet.
   The terminal accesses the data network by establishing a session from the terminal to the RAN network element to the UPF network element to the DN network element.
(14) The network data analytics function network element is configured to provide network data collection and analysis functions based on technologies such as big data and artificial intelligence. In a 5G system, the network data analytics function network element may be an NWDAF network element. In a future communication system, the network data analytics function network element may still be an NWDAF network element or may have another name. This is not limited in this application.
(15) The slice selection function network element is configured to select a network slice and the like for a terminal. In a 5G communication system, the slice selection function network element may be an NSSF network element. In a future communication system, the network slice selection function network element may still be an NSSF network element or may have another name. This is not limited in embodiments of this application.
(16) The unified data repository network element is mainly responsible for storing structured data, and stored content includes subscription data and policy data, externally exposed structured data, and application-related data. In a 5G communication system, the unified data repository network element may be a UDR network element. In a future communication system, the unified data repository network element may still be a UDR network element or may have another name. This is not limited in this application.

It should be noted that in the following embodiments, the TNAP network element is referred to as TNAP for short, the TNGF network element is referred to as TNGF for short, the AMF network element is referred to as AMF for short, the AUSF network element is referred to as AUSF for short, and the terminal apparatus is described by using UE. Details are not described subsequently.

The UE may register with a core network through a 3rd Generation Partnership Project (3rd Generation Partnership Project, 3GPP) access network or a trusted non-3GPP access network (trusted non-3GPP access network, TNAN).

It should be understood that 3GPP access refers to accessing a mobile network by using a 3GPP access technology. The 3GPP access technology includes but is not limited to technologies such as 5G, LTE, UMTS, and the like. Generally, it may be understood that the 3GPP access technology uses access provided by types of base stations such as a gNB, an eNB, and the like. Non-3GPP access refers to accessing a network by using a technology other than the 3GPP access technology. A non-3GPP access technology includes but is not limited to technologies such as wireless fidelity (wireless fidelity, Wi-Fi), Bluetooth, zigBee (zigBee), or the like. Types of non-3GPP access include an untrusted non-3GPP access (untrusted non-3GPP access) technology and a trusted non-3GPP access (trusted non-3GPP access) technology. For example, in the untrusted non-3GPP access technology, a core network is accessed through a radio access node deployed by a non-operator, and in the trusted non-3GPP access technology, a core network is accessed through a radio access node deployed by an operator and a wireline access technology.

A non-3GPP access network device may include but not limited to: a non-3GPP interworking function (non-3GPP interworking function, N3IWF), a trusted non-3GPP gateway function (trusted non-3GPP gateway function, TNGF), a trusted non-3GPP access point (trusted non-3GPP access point, TNAP), a trusted wireless local area network interworking function (trusted wireless local area network interworking function, TWIF), and a wireline access gateway function (wireline access gateway function, W-AGF). The W-AGF may also be referred to as an AGF.

For example, if the access technology is the untrusted non-3GPP access technology, a non-3GPP access network device corresponding to the untrusted non-3GPP access technology may include the N3IWF. A network topology structure of the N3IWF is equivalent to a radio access network (radio access network, RAN) in a 3GPP access network, and an N2 interface and an N3 interface may be supported. If the access technology is the trusted non-3GPP access technology, a non-3GPP access network device corresponding to the trusted non-3GPP access technology may include the TNGF. A network topology structure of the TNGF is equivalent to a RAN in a 3GPP access network, and an N2 interface and an N3 interface may be supported.

### 2. UE identifier:

In a 3GPP system, the UE identifier is classified into two types: a permanent identifier and an anonymous identifier of the UE. The permanent identifier is stored in a universal subscriber identity module (Universal Subscriber Identity Module, USIM). Because the 3GPP system has a privacy protection requirement, the permanent identifier of the UE cannot be transmitted over an air interface, since transmission over the air interface may cause leakage of the permanent identifier, and consequently, the user is traced. Therefore, only the anonymous identifier can be transmitted over the air interface.

Typical anonymous identifiers include a subscription concealed identifier (Subscription Concealed Identifier, SUCI) and a 5G globally unique temporary identity (5G globally unique temporary identity, 5G-GUTI). The SUCI may be calculated by the UE by using an SUPI. For example, the UE encrypts the SUPI by using a public key in a USIM card. The SUCI may be in a network access identifier (Network Access Identifier, NAI) format, that is, a username@realm format, or may be in an international mobile subscriber identity (International Mobile Subscriber Identity, IMSI) format. From a perspective of a network side, the SUCI in the NAI format may not uniquely identify a UE. For the SUCI in the NAI format, username is a user name part of the SUCI, and @realm is a domain name part of the SUCI.

When the UE accesses a network for the first time, the UE attempts to access the network by using the SUCI. When the UE accesses the network, the AMF generates a 5G-GUTI and sends the 5G-GUTI to the UE. When the UE accesses the network again subsequently, the UE may attempt to access the network by using the 5G-GUTI.

When the UE accesses the network for the first time and the USIM card of the UE does not have a public key, an anonymous SUCI is introduced to prevent the SUPI from being exposed. When the anonymous SUCI is in the NAI format, the format of the anonymous SUCI may be: (1) the username part is omitted, that is, the format is @realm; or (2) username is a fixed character string, that is, the format is anonymous@realm. Because username in anonymous SUCIs sent by all UEs are either omitted, or values of the username are the same, the anonymous SUCI has a function of hiding a user identity.

In a possible implementation, embodiments of this application provide the following technical solutions, to avoid a problem that a TNGF cannot determine TNGF keys corresponding to different UEs when the UE registers with the network by using an anonymous SUCI, thereby improving communication security performance. The following briefly describes the solutions in embodiments of this application. In embodiments of this application, the UE generates identification information that can uniquely represent the UE and sends the identification information to the TNGF. The TNGF associates the identification information with a TNGF key corresponding to the UE. In this way, after subsequently receiving the identification information sent by the UE, the TNGF may determine, based on the identification information, the TNGF key corresponding to the UE.

The following describes in detail implementations of embodiments of this application with reference to the accompanying drawings in this specification.

A communication method provided in embodiments of this application may be applied to any communication system. The communication system may be a 3rd Generation Partnership Project (third generation partnership project, 3GPP) communication system, for example, a non-terrestrial communication network (non-terrestrial network, NTN) system or an LTE communication system, or may be a 5G mobile communication system, an NR communication system, or a new radio vehicle-to-everything (vehicle-to-everything, NR V2X) system. The communication method may also be applied to a system in LTE and 5G hybrid networking, a device-to-device (device-to-device, D2D) communication system, a machine to machine (machine to machine, M2M) communication system, Internet of Things (internet of things, IoT), and another next-generation communication system, for example, a future communication system such as 6G, or may be a non-3GPP communication system. This is not limited. It should be noted that the solutions in embodiments of this application may also be applied to another communication system, and a corresponding name may also be replaced with a name of a corresponding function in the another communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used for representing giving an example, an illustration, or descriptions. Any embodiment or design scheme described as an "example" in this application should not be explained as being more preferred or having more advantages than another embodiment or design scheme. Exactly, the term "example" is used for presenting a concept in a specific manner.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

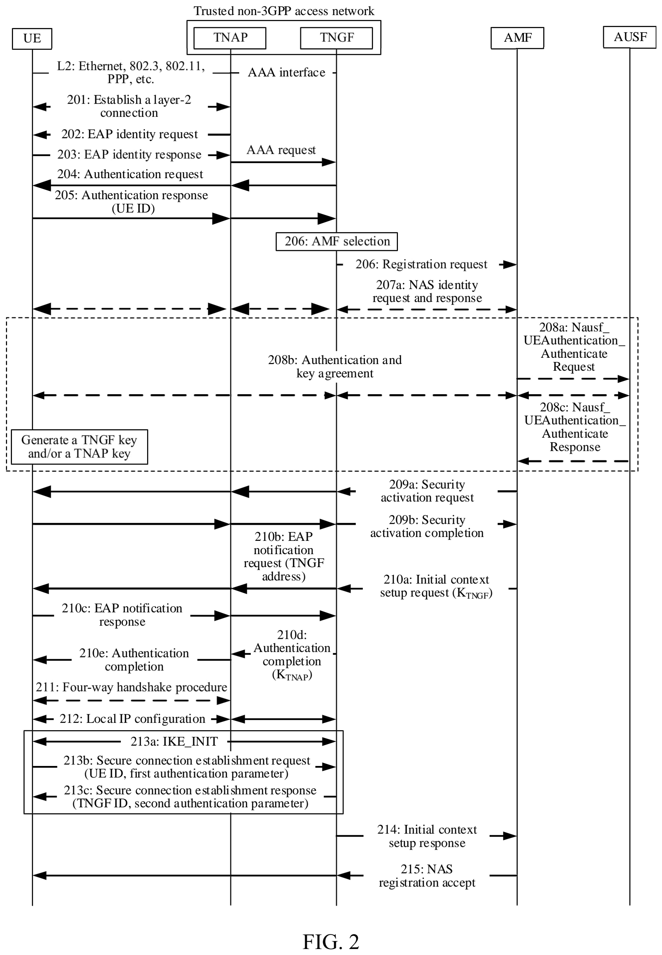

For ease of understanding of embodiments of this application, the embodiment in FIG. 2 shows a procedure in which a UE accesses a network through trusted non-3GPP. For a detailed procedure, refer to section 7A.2.1 in TS 33.501 release 18.0.0.

It should be noted that the procedure includes two authentication procedures, and the two authentication procedures respectively include a first authentication procedure, that is, a primary authentication procedure (which is referred to as a primary authentication procedure in the following unless otherwise specified), and a second authentication procedure. In the primary authentication procedure, an authentication server (authentication server) is an AUSF, an authenticator (authenticator) is an AMF, and an authenticated party is the UE. A method used in the primary authentication procedure is extensible authentication protocol (extensible authentication protocol, EAP)-authentication and key agreement' (authentication and key management', AKA'), that is, an EAP-AKA' method or a 5G-AKA method. Details are not described herein. In the second authentication procedure, an authentication server is a TNGF, an authenticator is a TNAP, and an authenticated party is the UE. A relationship between a time at which the primary authentication procedure is executed and a time at which the second authentication procedure is executed is as follows: The UE first triggers the second authentication procedure (corresponding to steps 201 to 205). In an execution process of the second authentication procedure, the AMF triggers the first authentication procedure (corresponding to steps 207 to 209). After the first authentication procedure is successfully completed, the second authentication procedure continues to be executed (corresponding to step 210), where ending of step 210 indicates that the second authentication procedure is completed.

Step 201: Establish a layer-2 connection between the UE and a trusted non-3GPP access point (Trusted Non-3GPP Access Point, TNAP).

In non-3GPP access of another type (for example, an Ethernet type), this step may not need to be performed.

Step 202: The TNAP sends an EAP identity request (EAP-Req/Identity) message to the UE to request to obtain identification information of the UE.

Step 203: The UE returns an EAP identity response (EAP-Res/Identity) message to the TNAP.

For example, an EAP authentication procedure is triggered in step 202 and step 203. These EAP messages (EAP identity request/EAP identity response) are encapsulated in a layer-2 data packet and transmitted over the layer-2 connection established in step 201.

The EAP identity response message includes an identifier in an NAI format of the UE, and the NAI format may be a username@realm format. An NAI carries information for selecting a TNGF, for example, a full qualified domain name (full qualified domain name, FQDN) of the TNGF. The identifier in the NAI format triggers the TANP to send an authentication, authorization, and accounting (authentication, authorization, and accounting, AAA) request to the TNGF. An EAP data packet between the TNAP and the TNGF is encapsulated by using an AAA message.

Step 204: The TNGF sends an authentication request (EAP Request/5G-Start) message to the UE.

For example, the authentication request message is used to start an EAP-5G authentication procedure.

Step 205: The UE returns an authentication response (EAP-Response/5G-NAS) message to the TNGF.

The authentication response message includes an access network parameter (access network parameter, AN-Params) part and a non-access stratum-protocol data unit (non-access stratum-protocol data unit, NAS-PDU) part, where the NAS-PDU part carries a registration request (Registration Request) message, and the AN-Params part carries a user identifier field (UE ID). The UE ID may be a SG-globally unique temporary identity (SG-globally unique temporary UE identity, 5G-GUTI) or a subscription concealed identifier (subscription concealed identifier, SUCI). Parameters carried in the AN-Params part may be viewed and used by the TNGF. For example, the UE ID and/or other parameters (for example, PLMN ID and the like) in the AN-Params may be used by the TNGF to select an AMF. The registration request message included in the NAS-PDU carries identity information of the UE, and a value of the identity information is the same as that of the UE ID in the AN-Params. For example, if the AN-Params carriers an SUCI, the registration request message also carriers an SUCI; if the AN-Params carries an anonymous SUCI, the registration request message also carries an anonymous SUCI; or if the AN-Params carries a 5G-GUTI, the registration request message also carries a 5G-GUTI. The SUCI or the anonymous SUCI is generated by the UE, and the 5G-GUTI is generated and sent to the UE by a core network element AMF when the UE accesses the network for the first time.

Specifically, if the UE registers with the network for the first time, the AN-Params carries the SUCI. When a USIM card of the UE does not have a public key and an operator has a requirement for protecting user privacy, the AN-Params carries the anonymous SUCI. If the UE accesses the network not for the first time, that is, the UE has previously accessed the network, the AN-Params carries the 5G-GUTI. Initial registration with/access to a network means that the UE registers with/accesses the network without an available 5G NAS security context.

Step 206: The TNGF performs AMF selection, and the TNGF sends the registration request message to a selected AMF.

Step 207 (optional): When the registration request message in step 206 carries the 5G-GUTI and the AMF cannot determine a real identity SUPI of the UE based on the 5G-GUTI, the AMF sends a NAS identity request (NAS Identity Request) message to the UE, where the message is used to obtain the identity information of the UE. The UE returns a NAS identity response (NAS Identity Response) message to the AMF, where the NAS identity response message includes the SUCI.

Step 208: The AMF determines to authenticate the UE, and performs step 208a.

When receiving the SUCI, the AMF may determine to authenticate the UE. Alternatively, when receiving the 5G-GUTI, the AMF may determine not to perform authentication. In this case, a bidirectional authentication procedure between the UE and the AMF may not be executed. Alternatively, after receiving the 5G-GUTI, the AMF determines, according to a local policy or by using the SUCI in the registration request message received in step 206, to authenticate the UE.

When the AMF determines to perform authentication on the UE and the authentication succeeds, the UE and the AMF separately generate a same TNGF key K_{TNGF}. Optionally, the UE may further generate a TNAP key K_{TNAP}. The K_{TNGF} is generated by the UE based on a long-term key, and the K_{TNAP} is derived based on the K_{TNGF}. Optionally, the UE may alternatively generate the K_{TNGF} and/or the K_{TNAP} in subsequent step S209a. Optionally, a procedure in which the AMF performs authentication on the UE is divided into steps 208a, 208b, and 208c, as shown below:
Step 208a: The AMF sends an Nausf_UEAuthentication_Authenticate Request message to the AUSF, where the Nausf_UEAuthentication_Authenticate Request message includes the identity information of the UE carried in the registration request message.
Step 208b: The AUSF initiates an authentication and key agreement (Authentication and Key Agreement, AKA) procedure to the UE, for example, a 5G-AKA procedure or an EAP-AKA' procedure. After the agreement is completed, the AUSF returns step 208c to the AMF.
Step 208c: The AUSF returns an Nausf_UEAuthentication_Authenticate Response message to the AMF, where the Nausf_UEAuthentication_Authenticate Response message includes an SEAF key.

Specifically, the AMF may derive a NAS key (for example, a NAS confidentiality protection key and/or a NAS integrity protection key) and the K_{TNGF} by using the SEAF key. The SEAF key is also generated based on the long-term key corresponding to the UE.

Step 209: Execute a NAS security activation procedure between the AMF and the UE. After the procedure is completed, the UE and the AMF start to perform confidentiality protection and/or integrity protection on a NAS message by using the NAS confidentiality protection key and/or the NAS integrity protection key. Specifically, step 209 is divided into steps 209a and 209b, as shown below:
Step 209a: The AMF sends a security activation request message (for example, a security mode command (NAS Security Mode Command)) to the UE. When an EAP-AKA' authentication procedure is used, the security activation request message may further include EAP-Success, indicating that the AMF successfully authenticates the UE. The EAP-Success message is generated by the AUSF, and indicates that the AUSF successfully authenticates the UE.
Step 209b: The UE returns a security activation complete (NAS Security Mode Complete) message to the AMF.
Step 210: The TNGF and the UE complete authentication. Specifically, step 210 is divided into steps 210a, 210b, 210c, 210d, and 210e, as shown below:
   Step 210a: After the AMF receives the security activation complete message from the UE, the AMF sends an initial context setup request (NGAP Initial Context Setup Request) message to the TNGF, where the initial context setup request message includes the K_{TNGF}.

In this case, the UE and the TNGF have a same key K_{TNGF}.

Step 210b: The TNGF sends an EAP notification request (EAP-Request/5G-Notification) message to the UE, where the EAP notification request message includes an address of the TNGF (for example, an IP address of the TNGF), and the address is used by the UE to subsequently establish a secure connection (for example, an IP security tunnel IPSec) with the TNGF.

Step 210c: The UE sends an EAP notification response (EAP-Response/5G-Notification) message to the TNGF.

Step 210d: After receiving the authentication response message from the UE, the TNGF sends an AAA message to the TNAP, where the AAA message includes an authentication complete (EAP-Success) message and the K_{TNAP}.

For example, the authentication complete message is generated by the TNGF, and sending of the message means that the EAP-5G procedure successfully ends.

Step 210e: The TNAP stores the K_{TNAP}, and sends the authentication complete message (EAP-Success) to the UE. Correspondingly, the UE receives the authentication complete message from the TNAP, and the EAP-5G authentication session is completed.

Step 211 (optional): An L2 security (layer-2 security) link is established between the UE and the TNAP, the UE and the TNAP complete a four-way handshake by using the K_{TNAP}, and a security association is established to protect a subsequent message exchanged between the UE and the TNAP, that is, all subsequent messages between the UE and the TNAP are encrypted and/or integrity protected.

Step 212: The UE receives an IP configuration of a trusted non-3GPP access network (Trusted Non-3GPP Access Network, TNAN). For example, the UE obtains an address of the UE (for example, an IP address of the UE) by using a dynamic host configuration protocol (dynamic host configuration protocol, DHCP).

Step 213: The UE initiates a procedure of establishing a secure connection with the TNGF.

Specifically, step 213 is divided into steps 213a, 213b, and 213c, as shown below:
Step 213a: The UE initiates initial key exchange (internet key exchange, IKE_INIT) with the TNGF by using the received address of the TNGF, to negotiate a session key.

After the IKE_INIT exchange is completed, the UE and the TNGF generate the session key and negotiate a security protection algorithm. The UE and the TNGF perform confidentiality and/or integrity protection on a subsequent exchanged message by using the session key and the negotiated security protection algorithm.

Step 213b: The UE sends a secure connection establishment request (IKE_AUTH) message to the TNGF.

The secure connection establishment request message includes an initiator identifier (initiator identifier, IDi) of the UE and a first authentication parameter AUTH, where a value of the IDi is the same as the value of the UE ID provided in step 205.

In a possible implementation, before sending the establishment request (IKE_AUTH) message, the UE calculates a check key K_{TIPSec} based on the K_{TNGF}, and calculates the first authentication parameter AUTH by using the K_{TIPSec}.

Step 213c: The TNGF returns a secure connection establishment response (IKE_AUTH) message to the UE.

The secure connection establishment response message includes a responser identifier (responser Identifier, IDr) and a second authentication parameter AUTH, where the second authentication parameter is calculated based on the K_{TNGF} on the TNGF side. Optionally, before the TNGF sends the secure connection establishment response (IKE_AUTH) message, the TNGF calculates the K_{TIPSec} based on the K_{TNGF}, verifies correctness of the first authentication parameter AUTH by using the K_{TIPSec}, and performs step 213c after the verification succeeds. The second authentication parameter AUTH is calculated by the TNGF based on the K_{TIPSec}.

After receiving the secure connection establishment response message, the UE verifies the second authentication parameter AUTH by using the K_{TIPSec}. After the verification by the UE succeeds, bidirectional verification between the UE and the TNGF is completed.

It should be noted that, after step 213c, a secure connection is established between the UE and the TNGF. The secure connection is used for transmission of all subsequent NAS messages.

Step 214: The TNGF returns an initial context setup response message to the AMF.

For example, the initial context setup response message is used to notify the AMF that a UE context has been created.

Step 215: The AMF sends a NAS registration accept (NAS Registration Accept) message to the UE. The UE completes a process of registering with the network through trusted non-3GPP.

For example, the NAS registration accept (NAS Registration Accept) message is forwarded to the UE over the secure connection established in step 213.

It may be understood that, in the foregoing procedure, the TNGF stores the value of the UE ID in the AN parameter in step 205, that is, the SUCI or the 5G-GUTI, and then after receiving the K_{TNGF} in step 210a, associatively stores the value of the UE ID and the K_{TNGF}. Then, after receiving a same SUCI or 5G-GUTI in step 213b, the TNGF may determine a K_{TNGF} corresponding to the UE. It can be learned that the TNGF does not need to know whether the UE ID carries the SUCI or the 5G-GUTI, and the TNGF only needs to store related content for subsequent key association.

In addition, in the foregoing procedure, the identity of the UE carried in the AN parameter and the identity of the UE carried in the NAS-PDU in step 205 are the same, that is, both are 5G-GUTIs or both are SUCIs.

For the foregoing solution in the conventional technology in which the UE accesses the network through trusted non-3GPP, when the USIM card of the UE does not have the public key, and the operator has the requirement for protecting user privacy, the UE uses the anonymous SUCI to protect privacy. However, when the anonymous SUCI is used, a method for the TNGF to determine the key of the UE is problematic. This is because anonymous SUCIs of different UEs may be the same. Specifically, this is because composition of the anonymous SUCI is fixed, that is, either @realm or anonymous@realm. Consequently, a same realm definitely leads to a same anonymous SUCI between different UEs. Therefore, regardless of whether the AN parameter carries the anonymous SUCI, the TNGF cannot obtain the TNGF key corresponding to the UE. Consequently, a problem occurs when the secure connection between the TNGF and the UE is established in step 213.

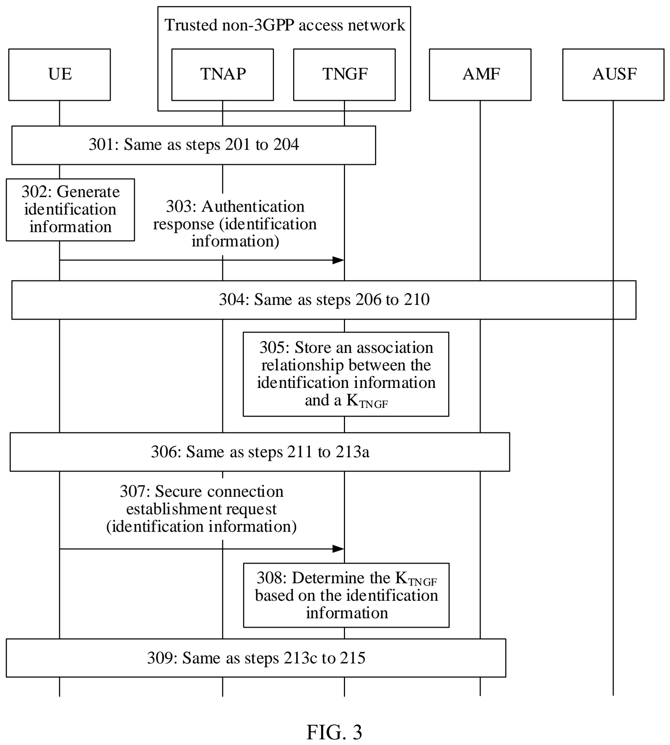

To resolve the foregoing problem, this embodiment provides the following solution. A flowchart of a communication method is shown in FIG. 3. The procedure includes the following steps.

Step 301: For specific steps, refer to steps 201 to 204, and details are not described herein again.

Step 302: The UE generates identification information.

The identification information can uniquely represent the UE. The identification information may be generated at any occasion before step 303 is performed. For example, the UE may generate the identification information after receiving the authentication request from the TNGF (step 204); or may generate the identification information after receiving the EAP identity request from the TNAP (step 202); or may generate the identification information before or after establishing the layer-2 connection to the TNAP (step 201); or may generate the identification information when the UE determines that the USIM card has no public key and the operator has a privacy requirement; or may generate the identification information after the UE generates the anonymous SUCI. This embodiment does not limit a specific occasion for generating the identification information.

In this embodiment of this application, the UE may generate the identification information in any one of the following manners:
Manner 1: The identification information is a first random number, and the first random number is any random number that can uniquely represent the UE.

For example, the UE randomly generates the first random number, and a length of the first random number may be any length within 64 bits. For example, the length of the first random number is 64 bits. A length and a unit of the generated random number and a manner of generating the random number are not limited in this embodiment.

In a possible implementation, the UE generates the first random number by using the registration request message or some content of the registration request message as an input parameter, to ensure uniqueness of the random number. For example, the UE generates the first random number by using an encrypted part in the registration request message. Manner 2: The identification information is a first hash value, and the first hash value is any hash value of a parameter that can uniquely represent the UE.

For example, the parameter that can uniquely represent the UE may be one or a combination of the random number in Manner 1, the SUPI of the UE, the K_{TNGF}, and the long-term key K of the UE (where the K_{TNGF} is generated based on the long-term key). A specific generation manner of the first hash value is not limited in this embodiment.

Manner 3: The identification information is a modified SUCI.

A user name part of the modified SUCI can uniquely represent the UE, for example, may be the first random number determined in Manner 1 or the first hash value determined in Manner 2, or may be a parameter further derived based on the first random number or the first hash value. A domain name part of the modified SUCI is the same as that of the anonymous SUCI of the UE.

For example, if the anonymous SUCI of the UE is anonymous@realm, the modified SUCI may be rand1@realm, where rand1 may be the first random number generated in Manner 1.

Step 303: The UE sends an authentication response message to the TNGF, where the authentication response message includes the identification information. Correspondingly, the TNGF receives the authentication response message from the UE, and stores the identification information.

The identification information may be carried in the UE ID part in the AN parameter, and the registration request message includes the anonymous SUCI.

Step 304: For specific steps, refer to steps 206 to 210, and details are not described herein again.

Step 305: After the TNGF receives the K_{TNGF} by using the initial context setup request message sent by the AMF (step 210a), the TNGF associatively stores the identification information and the K_{TNGF}.

For example, the associative storage is represented as that the TNGF may determine the K_{TNGF} based on the identification information. For example, the identification information and the K_{TNGF} may be stored as a correspondence. Alternatively, the associative storage may be represented as that the identification information and the K_{TNGF} are separately stored, and an index between the identification information and the K_{TNGF} is established. Subsequently, the TNGF may determine the K_{TNGF} based on the identification information and the index. The identification information is stored after the TNGF receives the authentication response message from the UE (step 303), and the index may be at any occasion after the K_{TNGF} is received (step 210a) and before step 307. A specific generation time of the index is not limited in this embodiment.

Step 306: For specific steps, refer to steps 211 to 213a, and details are not described herein again.

Step 307: The UE sends the secure connection establishment request (IKE_AUTH) message to the TNGF.

A difference between step 307 and step 213b lies in that a value of the IDi carried in the secure connection establishment request (IKE_AUTH) message is set to the identification information, that is, the value of the IDi is no longer the same as the value of the UE ID provided in step 205.

For other content, refer to related descriptions in step 213b, and details are not described herein again.

Step 308: The TNGF determines a corresponding K_{TNGF} based on the identification information.

Step 309: For specific steps, refer to steps 213c to 215, and details are not described herein again.

Based on the communication method provided in this embodiment of this application, the UE generates, when using the anonymous SUCI, the identification information that can uniquely identify the UE. Although UE identities carried in the AN parameter (identification information) and the registration request message (anonymous SUCI) are different, this is a solution that does not change existing logic of the TNGF. Therefore, a problem that the TNGF cannot distinguish different keys of different UEs caused by use of the anonymous SUCI is avoided, and only the UE needs to be changed, thereby reducing network upgrade costs.

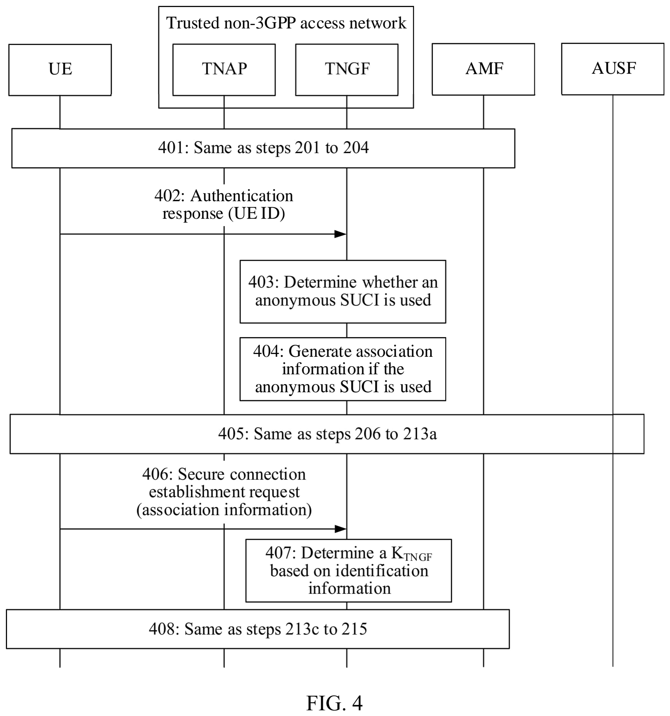

To resolve the problem that the TNGF cannot distinguish between different UEs by using a same anonymous SUCI, this embodiment provides another solution. The UE still uses the anonymous SUCI for access. When determining that the UE uses the anonymous SUCI, the TNGF generates association information that can be associated with the UE. The association information may be sent by the TNGF to the UE, or may be generated by the UE. A flowchart of a communication method is shown in FIG. 4. The procedure includes the following steps.

Step 401: For specific steps, refer to steps 201 to 204, and details are not described herein again.

Step 402: The UE sends an authentication response message to the TNGF. Correspondingly, the TNGF receives the authentication response message from the UE.

For related descriptions, refer to step 205. Different from step 205, the AN-Params further includes indication information. The indication information indicates that the UE accesses the network by using the anonymous SUCI.

In this embodiment of this application, the indication information may be any one of the following:
Manner 1: The UE fills the UE ID in the AN parameter part with the anonymous SUCI. That is, when the UE ID in the AN parameter part is in a format of the anonymous SUCI, it indicates that the UE is accessing the network by using the anonymous SUCI. This method may also be referred to as an implicit indication method.
Manner 2: The UE sets the UE ID in the AN parameter part to an empty value, a meaningless value, or does not carry the UE ID parameter. This method is also an implicit indication method.
Manner 3: The indication information is a newly added IE, and the IE indicates whether the UE uses the anonymous SUCI for access. This IE may use bit indication information or enumerated information to indicate whether the anonymous SUCI is used for access. For example, when a bit value is 0, it indicates that the UE uses a non-anonymous SUCI or the 5G-GUTI for access; or when a bit value is 1, it indicates that the UE uses the anonymous SUCI for access. This method may also be referred to as an explicit indication method.

Alternatively, the indication information is a newly added IE, and presence of the IE indicates that the UE is using the anonymous SUCI for access. If this IE is not present, it indicates that the UE uses the non-anonymous SUCI or the 5G-GUTI for access. This method may also be referred to as an explicit indication method.

Step 403: The TNGF determines a specific manner for associating the key.

There are two methods for the TNGF to associate the UE with the key K_{TNGF}:
Method 1 is the method described in step 206 to step 215 and step 301 to step 309. In this method, the TNGF performs association by using the UE ID carried in the AN part.
Method 2 is a method of using association information, which is subsequently mentioned in this embodiment.

Specifically, if the TNGF determines that the AN-Params carries the SUCI or the 5G-GUTI, or carries the UE ID but does not carry the indication information, the TNGF performs Method 1. If the TNGF determines that the UE is registering with the network by using the anonymous SUCI, Method 2 is used.

After receiving the authentication response message from the UE, the TNGF determines, based on the AN-Params in the authentication response message, whether the UE uses the SUCI, the 5G-GUTI, or the anonymous SUCI during registration. For the three indication manners in step 402, corresponding determining manners are as follows:
For Manner 1: The TNGF determines, based on a preconfigured method #1, whether the UE uses the SUCI, the anonymous SUCI, or the 5G-GUTI for access. For example, format information of the anonymous SUCI is preconfigured in the TNGF. When the format information is not met, it is determined that the UE is using the SUCI or the 5G-GUTI for access. When a format of the UE ID is the same as a format of the anonymous SUCI, it is determined that the UE uses the anonymous SUCI for access, and a subsequent procedure in this embodiment continues. When the format of the UE ID is the same as that of the SUCI or the format of the 5G-GUTI, steps 206 to 215 are performed. For the format information of the anonymous SUCI, refer to the foregoing descriptions. Optionally, the TNGF may further distinguish, based on the preconfigured format information, whether the UE uses the SUCI or the 5G-GUTI.
For Manner 2: The TNGF determines, based on a pre-configured method #2, whether the AN parameter part carries an empty value or a meaningless value, or whether the AN parameter part does not carry the UE ID part. If one of the foregoing conditions is met, the TNGF determines that the UE uses the anonymous SUCI, and the subsequent procedure in this embodiment continues; otherwise, steps 206 to 215 are performed.
For Manner 3: The TNGF determines whether the UE uses the anonymous SUCI by checking whether a newly added IE appears or by checking a value of the newly added IE. If it is determined that the anonymous SUCI is used for access, the subsequent procedure in this embodiment continues. If it is determined that the SUCI or the 5G-GUTI is used, or the anonymous SUCI is not used, steps 206 to 215 are performed.

Step 404: After determining that the identifier of the UE is the anonymous SUCI, the TNGF obtains association information.

The association information is a newly generated value, or may be an existing value. The association information may uniquely identify one terminal device, and unique identification may be unique only in a range of the TNGF, or may be unique on the entire network. A range of the unique identification is not limited in this embodiment. For example, the association information may be a hash value obtained through calculation, or may be an allocated identifier that can be uniquely associated with the UE side, or a TNGF key K_{TNGF} that is uniquely associated with the UE, or a key identifier of the K_{TIPsec}. It should be noted that step 404 may be immediately performed after step 403, or may be performed at any time between step 403 and step 406. This means that, after determining that the UE uses the anonymous SUCI, the TNGF does not need to immediately obtain the association information, that is, a determining occasion and an occasion for obtaining the association information may be separated. This is because the association information may not be available immediately. For example, after the TNGF determines, in step 404, that the UE uses the anonymous SUCI for access, after obtaining the K_{TNGF} in step 210a, the TNGF calculates a hash value by using the preconfigured method and the K_{TNGF}. The hash value is the association information. That is, only after step 210a, the TNGF can obtain the association information and associatively store the association information and the K_{TNGF}. Correspondingly, after generating the same K_{TNGF}, the UE may obtain, by using the preconfigured method and the K_{TNGF}, the same hash value as that calculated by the TNGF. For another example, after the TNGF allocates the address of the UE to the UE in step 212, because the TNGF has determined that the UE uses the anonymous SUCI for access, the TNGF uses the address of the UE as the association information, and associatively stores the association information and the K_{TNGF}. After receiving the address of the UE, the UE uses the address of the UE as the association information.

Step 405: For specific steps, refer to steps 206 to 213a, and details are not described herein again.

It should be noted that the UE side also needs to obtain the association information. There are two methods for the UE side to obtain the association information:
Method a: The UE side may generate the association information by using the same generation method as that on the TNGF side.

For example, the UE side may register with the network by using the anonymous SUCI, and then determine that the association information needs to be generated. The UE may generate the association information immediately after obtaining a related parameter, or may generate the association information before sending in step 406. For example, in the foregoing hash value generation method, after obtaining the K_{TNGF}, the UE may generate the association information immediately, or may generate the association information before step 406 is performed. This embodiment does not limit a specific occasion at which the UE generates an association parameter.

Method b: The UE side may alternatively obtain the association information by using a message sent by the TNGF.

For example, in the foregoing method of using the address of the UE as the association information, the address of the UE is sent to the UE in step 212. Therefore, after obtaining address information of the UE in step 212, the UE uses the address of the UE as the association information.

Step 406: The UE sends a secure connection establishment request (IKE_AUTH) message to the TNGF, where the secure connection establishment request message includes an IDi and a first authentication parameter AUTH.

The IDi is the association information. For other content, refer to related descriptions in step 213b, and details are not described herein again.

Step 407: After receiving the secure connection establishment request message from the UE, the TNGF determines a corresponding K_{TNGF} based on the association information. For other content, refer to related descriptions in step 213b, and details are not described herein again.

Step 408: For specific steps, refer to steps 213c to 215, and details are not described herein again.

Based on the communication method provided in this embodiment of this application, when the UE performs registration by using the anonymous SUCI, the indication information is implicitly or explicitly transferred to the TNGF, so that the TNGF determines that the UE is registering with the network by using the anonymous SUCI, and the TNGF further knows that one piece of association information needs to be obtained. Then, when establishing a secure connection, the UE carries the association information in an IDi payload, so that the TNGF can uniquely identify the UE based on the association information. The foregoing describes, in detail with reference to FIG. 2 to FIG. 4, the communication method provided in embodiments of this application.

Based on a same inventive concept as the method embodiments, an embodiment of this application further provides an apparatus 500 and an apparatus 600, configured to perform the methods performed by the terminal apparatus or the TNGF in the method embodiments shown in FIG. 2 to FIG. 4. For related features, refer to the foregoing method embodiments. Details are not described herein again.

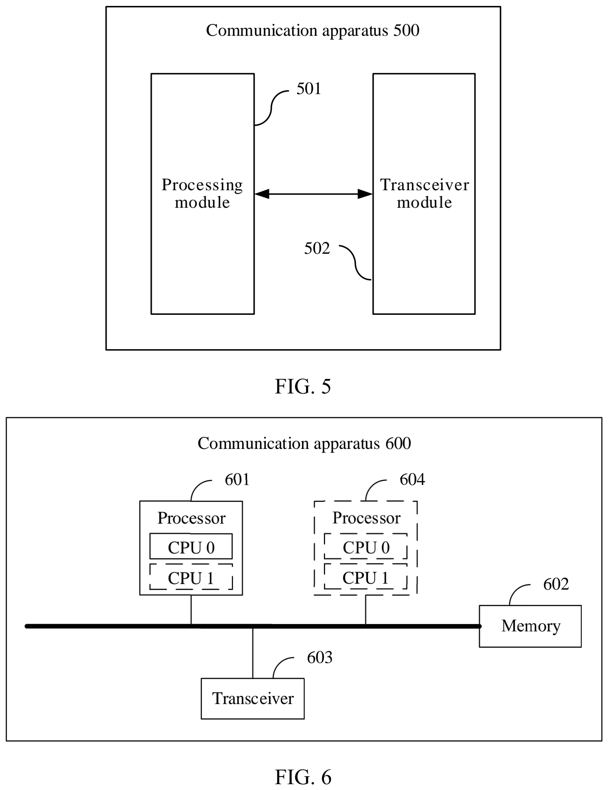

In an example, as shown in FIG. 5, the apparatus 500 includes a transceiver module 501 and a processing module 502. The transceiver module 501 is configured to perform a corresponding message receiving and sending action, and the processing module may be configured to perform all actions except receiving and sending information. For specific functions of the transceiver module 801 and the processing module 802, refer to descriptions in the foregoing method embodiments. Details are not described herein again.

For example, FIG. 6 is a diagram of a second structure of a communication apparatus according to an embodiment of this application. The communication apparatus may be a terminal apparatus or a TNGF. As shown in FIG. 6, the communication apparatus 600 may include a processor 601. Optionally, the communication apparatus 600 may further include a memory 602 and/or a transceiver 603. The processor 601 is coupled to the memory 602 and the transceiver 603. For example, the processor may be connected to the memory and the transceiver through a communication bus.

The following describes each component of the communication apparatus 600 in detail with reference to FIG. 6.

The processor 601 is a control center of the communication apparatus 600, and may be a processor or may be a general term of a plurality of processing elements. For example, the processor 601 is one or more central processing units (central processing unit, CPU), or an application-specific integrated circuit (application-specific integrated circuit, ASIC), or is configured as one or more integrated circuits implementing embodiments of this application, for example, one or more digital signal processors (digital signal processor, DSP) or one or more field programmable gate arrays (field programmable gate array, FPGA).

Optionally, the processor 601 may perform various functions of the communication apparatus 600 by running or executing a software program stored in the memory 602 and invoking data stored in the memory 602.

In a specific implementation, in an embodiment, the processor 601 may include one or more CPUs, for example, a CPU 0 and a CPU 1 shown in FIG. 6.

During specific implementation, in an embodiment, the communication apparatus 600 may alternatively include a plurality of processors, for example, the processor 601 and a processor 604 shown in FIG. 6. Each of the processors may be a single-core processor (single-CPU), or may be a multi-core processor (multi-CPU). The processor herein may be one or more devices, circuits, and/or processing cores configured to process data (for example, computer program instructions).

The memory 602 is configured to store a software program for executing the solutions in this application, and the processor 601 controls execution. For a specific implementation, refer to the foregoing method embodiments. Details are not described herein again.

Optionally, the memory 602 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be used to carry or store expected program code in a form of an instruction or a data structure and that can be accessed by a computer. However, the memory is not limited thereto. The memory 602 may be integrated with the processor 601, or may exist independently, and is coupled to the processor 601 through an interface circuit (not shown in FIG. 6) in the communication apparatus 600. This is not specifically limited in this embodiment of this application.

The transceiver 603 is configured to communicate with another communication apparatus. For example, the communication apparatus 600 is a terminal device, and the transceiver 603 may be configured to communicate with a network device or communicate with another terminal device. For another example, the communication apparatus 600 is a network device, and the transceiver 603 may be configured to communicate with a terminal device or communicate with another network device.

Optionally, the transceiver 603 may include a receiver and a transmitter (not separately shown in FIG. 6). The receiver is configured to implement a receiving function, and the transmitter is configured to implement a sending function.

Optionally, the transceiver 603 may be integrated with the processor 601, or may exist independently, and is coupled to the processor 601 through an interface circuit (not shown in FIG. 6) in the communication apparatus 600. This is not specifically limited in this embodiment of this application.

It should be noted that the structure of the communication apparatus 600 shown in FIG. 6 does not constitute a limitation on the communication apparatus. An actual communication apparatus may include more or fewer components than those shown in the figure, or combine some components, or have different component arrangement.

In addition, for technical effects of the communication apparatus 600, refer to the technical effects of the communication method in the foregoing method embodiments. Details are not described herein again.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may also be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware (for example, a circuit), firmware, or any combination thereof. When software is used to implement the foregoing embodiments, the foregoing embodiments may be implemented completely or partially in a form of a computer program product. The computer program product includes one or more computer instructions or computer programs. When the computer instructions or the computer programs are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, an optical disc, or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a scenario in which a terminal apparatus registers with a network through a trusted non-3GPP access network, the trusted non-3GPP access network comprises a trusted non-3GPP gateway function TNGF, and the method comprises:
receiving, by the terminal apparatus, an authentication request message from the TNGF;
sending, by the terminal apparatus, an authentication response message to the TNGF in response to the authentication request message, wherein the authentication response message comprises a registration request message and identification information that is capable of uniquely representing the terminal apparatus, wherein the registration request message is used to request to register with the network, and carries an anonymous subscription concealed identifier SUCI corresponding to the terminal apparatus; and
sending, by the terminal apparatus, a secure connection establishment request message to the TNGF, wherein the secure connection establishment request message is used to trigger establishment of a secure connection between the terminal apparatus and the TNGF, wherein the secure connection establishment request message comprises the identification information and a first authentication parameter, the first authentication parameter is generated based on a TNGF key K_{TNGF}, and the K_{TNGF} is a shared key between the terminal apparatus and the TNGF.

2. The method according to claim 1, wherein the identification information is used by the TNGF to associate with the K_{TNGF}.

3. The method according to claim 1 or 2, wherein the method further comprises:
generating, by the terminal apparatus, a security tunnel key K_{TIPSec} based on the K_{TNGF}; and
generating, by the terminal apparatus, the first authentication parameter based on the K_{TIPSec}.

4. The method according to any one of claims 1 to 3, wherein the anonymous SUCI is an SUCI in a network access identifier NAI format, wherein a user name part of the SUCI in the NAI format is an empty value or a fixed character string.

5. The method according to any one of claims 1 to 4, wherein the method further comprises:
generating, by the terminal apparatus, the identification information when the terminal apparatus is not configured with a public key for the network.

6. The method according to any one of claims 1 to 5, wherein before sending, by the terminal apparatus, the authentication response message to the TNGF, the method further comprises:
determining, by the terminal apparatus, that the terminal apparatus accesses the network for the first time.

7. The method according to any one of claims 1 to 6, wherein the identification information is one or a combination of a random number generated by the terminal apparatus, a hash value of a parameter that is capable of uniquely representing the terminal apparatus, or a modified SUCI, wherein a user name part of the modified SUCI is determined based on the random number or the hash value.

8. The method according to claim 7, wherein a domain name part of the modified SUCI is the same as a domain name part of the anonymous SUCI.

9. The method according to any one of claims 1 to 8, wherein the authentication response message comprises an access network parameter and the registration request message, wherein the identification information is carried in a user identifier field of the access network parameter.

10. The method according to any one of claims 1 to 9, wherein the identification information is a 64-bit random number.

11. A communication method, wherein the method is applied to a scenario in which a terminal apparatus registers with a network through a trusted non-3GPP access network, and comprises:
sending, by a trusted non-3GPP gateway function TNGF in the trusted non-3GPP access network, an authentication request message to the terminal apparatus;
receiving, by the TNGF, an authentication response message from the terminal apparatus, wherein the authentication response message comprises a registration request message and identification information that is capable of uniquely representing the terminal apparatus, wherein the registration request message is used to request to register with the network, and carries an anonymous subscription concealed identifier SUCI corresponding to the terminal apparatus;
sending, by the TNGF, the registration request to a mobility management network element;
receiving, by the TNGF, a TNGF key K_{TNGF} from the mobility management network element, wherein the K_{TNGF} is a shared key between the terminal apparatus and the TNGF;
associatively storing, by the TNGF, the K_{TNGF} and the identification information;
receiving, by the TNGF, a secure connection establishment request message from the terminal apparatus, wherein the secure connection establishment request message is used to trigger establishment of a secure connection between the terminal apparatus and the TNGF, wherein the secure connection establishment request message comprises the identification information and a first authentication parameter;
obtaining, by the TNGF, the K_{TNGF} based on the identification information; and
when the TNGF successfully verifies the first authentication parameter based on the K_{TNGF}, continuing, by the TNGF, a procedure of establishing the secure connection

12. The method according to claim 11, wherein the anonymous SUCI is an SUCI in a network access identifier NAI format, wherein a user name part of the SUCI in the NAI format is an empty value or a fixed character string.

13. The method according to claim 11 or 12, wherein the identification information is one or a combination of a random number, a hash value of a parameter that is capable of uniquely representing the terminal apparatus, or a modified SUCI, wherein a user name part of the modified SUCI is determined based on the random number or the hash value.

14. The method according to claim 13, wherein a domain name part of the modified SUCI is the same as a domain name part of the anonymous SUCI.

15. The method according to any one of claims 11 to 14, wherein the identification information is a 64-bit random number.

16. A terminal apparatus, wherein the terminal apparatus comprises a module configured to perform the communication method according to any one of claims 1 to 10.

17. A trusted non-3GPP gateway function, wherein the trusted non-3GPP gateway function comprises a module configured to implement the communication method according to any one of claims 11 to 15.

18. A computer-readable storage medium, wherein computer-readable storage medium comprises a computer program or instructions, and when the computer program or the instructions are run on a computer, the computer is caused to perform the communication method according to any one of claims 1 to 15.

19. A communication system, wherein the communication system comprises a terminal apparatus and a trusted non-3GPP gateway function, wherein the terminal apparatus is configured to perform the method according to any one of claims 1 to 10, and the trusted non-3GPP gateway function is configured to perform the method according to any one of claims 11 to 15.

20. A computer program product, wherein the computer program product comprises a computer program or instructions, and when the computer program or the instructions are run on a computer, the computer is caused to perform the communication method according to any one of claims 1 to 15.
